# EUROPÄISCHE PATENTANMELDUNG

(11) **EP 3 641 115 A1**
(43) Veröffentlichungstag der Anmeldung: **22.04.2020**
(21) Anmeldenummer: 18201328.4
(22) Anmeldetag: 18.10.2018
(51) Int. Cl.: H02M 1/34, H02M 3/335, H02M 1/00

(54) **SPERRWANDLER MIT HOHEM WIRKUNGSGRAD**

(71) Anmelder: FRONIUS INTERNATIONAL GmbH, 4643 Pettenbach (AT)
(72) Erfinder: Overbeck, Ruben, 4643 Pettenbach (AT)
(74) Vertreter: Patentanwälte Pinter & Weiss OG

(57) **Zusammenfassung**

Es wird ein Sperrwandler (1) umfassend einen Speichertransformator (2) mit einer Primärinduktivität (L1) und zumindest einer mit der Primärinduktivität (L1) magnetisch gekoppelten Sekundärinduktivität (L2), angegeben, wobei Eingangsklemmen (A+, A-) für eine Eingangsgleichspannung (Ue) an einer Serienschaltung eines Halbleiterschalters (Q1) und der Primärinduktivität (L1) angeordnet sind und wobei Ausgangsklemmen (B+, B-) für eine Ausgangsgleichspannung (Ua) an einem parallel zu einer Serienschaltung der Sekundärinduktivität (L2) und einer Ausgangsdiode (D2) geschalteten Ausgangskondensator (C2) angeordnet sind, wobei eine Steuereinheit (5) zum abwechselnden Öffnen und Schließen des Halbleiterschalters (Q1) vorgesehen ist. Es sind eine Speicherdiode (D4) mit einer Sperrverzugszeit (trr) von 200 ns bis 5 µs und einer Durchlassrichtung gegen die Eingangsgleichspannung (Ue) und ein zur Speicherdiode (D4) in Serie geschalteter Entladekondensator (C4) parallel zur Primärinduktivität (L1) geschaltet. Eine Entladekondensatorspannung (U4) des Entladekondensator (C4) wird während der Sperrverzugszeit (trr) zumindest teilweise als Rückstrom (ir) in Sperrrichtung der Speicherdiode (D4) in die Primärinduktivität (L1) entladen, wobei die Primärwindung (L1) den Rückstrom (ir) auf die Sekundärwindung (L2) transformiert, wo sich der transformierte Rückstrom (ir') zum Sekundärstrom (i2) addiert.

## Beschreibung

Die gegenständliche Erfindung betrifft einen Sperrwandler umfassend einen Speichertransformator mit einer Primärinduktivität und zumindest einer mit der Primärinduktivität magnetisch gekoppelten Sekundärinduktivität, wobei Eingangsklemmen für eine Eingangsgleichspannung an einer Serienschaltung eines Halbleiterschalters und der Primärinduktivität angeordnet sind und wobei Ausgangsklemmen für eine Ausgangsgleichspannung an einem parallel zu einer Serienschaltung der Sekundärinduktivität und einer Ausgangsdiode geschalteten Ausgangskondensator angeordnet sind, wobei eine Steuereinheit zum abwechselnden Öffnen und Schließen des Halbleiterschalters vorgesehen ist. Weiters betrifft die gegenständliche Erfindung ein Verfahren zum Wandeln einer Eingangsgleichspannung eines Sperrwandlers in eine Ausgangsgleichspannung des Sperrwandlers, wobei abwechselnd von einer Leitphase in eine Sperrphase geschaltet wird, wobei in der Leitphase ein Halbleiterschalter eine Primärinduktivität eines Speichertransformators mit der Eingangsgleichspannung verbindet, und die Eingangsgleichspannung auf eine mit der Primärinduktivität magnetisch gekoppelte Sekundärinduktivität transformiert wird und eine in Serie mit der Sekundärinduktivität geschaltete Ausgangsdiode sperrt, wodurch Energie im Speichertransformator gespeichert wird und in der Sperrphase der Halbleiterschalter die Primärinduktivität von der Eingangsgleichspannung trennt, womit die Ausgangsdiode leitet. Damit kehrt sich die Spannungsrichtung an der Ausgangsdiode um und der Speichertransformator gibt die gespeicherte Energie in Form eines Ausgangsstroms über die Sekundärinduktivität an einen Ausgangskondensator, an welchem die Ausgangsgleichspannung anliegt, ab.

Schaltnetzteile werden verwendet um Eingangsgleichspannungen in Ausgangsgleichspannungen zu wandeln. Um diese Wandlung durchzuführen werden oftmals Sperrwandler (engl. flyback converter) verwendet. Ein Sperrwandler umfasst einen oder mehrere Halbleiterschalter, die zwischen einem leitenden und sperrenden Zustand hin und her schalten, womit sich der Sperrwandler abwechselnd in einer Leitphase oder in einer Sperrphase befindet. Kernstück eines Sperrwandlers ist ein Speichertransformator, welcher eine Primärinduktivität und eine mit der Primärinduktivität gegengekoppelte Sekundärinduktivität umfasst. In der Leitphase wird die Primärinduktivität mit der Eingangsgleichspannung versorgt. Die Sekundärinduktivität ist in Serie mit einer Ausgangsdiode verbunden, welche in der Leitphase sperrt. Damit kann in der Leitphase kein Ausgangsstrom über die Sekundärinduktivität fließen und es wird Energie in der Hauptinduktivität des Speichertransformators gespeichert. Wird in der Sperrphase die Primärinduktivität von der Eingangsgleichspannung getrennt, so fließt kein Eingangsstrom durch die Primärinduktivität. Die in der Hauptinduktivität des Speichertransformators gespeicherte Energie fließt als Ausgangsstrom über die nunmehr nicht gesperrte Ausgangsdiode in einen Ausgangskondensator und erzeugt somit die Ausgansspannung am Ausgangskondensator. Die Ausgangsgleichspannung wird vom Ausgangskondensator auch in der Leitphase aufrecht erhalten. Durch die Kopplung über den Speichertransformator sind die Ausgangsgleichspannung und die Eingangsgleichspannung elektrisch voneinander isoliert. Die Isolierung reduziert eine Kopplung von auf der Eingangsseite auftretenden Spannungsspitzen auf die Ausgansseite und verhindert ebenso Masseschleifen zwischen der Eingangsseite und der Ausgangsseite.

Als Halbleiterschalter werden meist Bipolar-Transistoren oder MOSFETs bzw. IGBTs eingesetzt. Für das Umschalten zwischen Sperrphase und Leitphase können ein festes oder variables Tastverhältnis, sowie eine feste oder variable Taktfrequenz vorgesehen sein. Die Taktfrequenz liegt üblicherweise im Bereich von 20 kHz bis 500 kHz, womit sowohl Transformatoren, als auch Induktivitäten und Kondensatoren klein dimensioniert werden, was wiederum zu einem hohen volumetrischen Wirkungsgrad führt. Da die Leitverluste und Schaltverluste des Halbleiterschalters gering sind, kann grundlegend ein hoher Wirkungsgrad des Sperrwandlers erreicht werden.

Beim Übergang von der Leitphase in die Sperrphase ist in einer Streuinduktivität des Speichertransformators noch Restenergie gespeichert. Diese Restenergie kann beispielsweise über ein Entlastungsnetzwerk, einen sogenannten Snubberkreis, entladen werden, um Spannungsspitzen am Halbleiterschalter zu vermeiden und die Restenergie schnell abzuführen. In einer RCD-Snubberschaltung kann die Restenergie der Streuinduktivität als Reststrom über eine Snubberdiode in einen Snubberkondensator geleitet werden. Der Snubberkondensator ist im Wesentlichen immer auf der über den Speichertransformator rücktransformierte Ausgangsgleichspannung multipliziert mit dem Übersetzungsverhältnis geladen, da die Entladezeit deutlich länger als die Schaltperiodendauer ist. Die Restenergie addiert sich zur Snubberkondensatorspannung als Spannungsüberhöhung, welche sich über einen parallel zum Snubberkondensator geschalteten Snubberwiderstand entlädt. Dabei werden jedoch einige Prozent (etwa 1 bis 3%) der Leistung des Sperrwandlers als Verlustleistung am Snubberwiderstand erzeugt, was den Wirkungsgrad senkt. Diese Energie muss durch geeignete Kühlung abgeführt werden und der Snubberwiderstand mit einem entsprechend großen Volumen gewählt werden. Damit steigt natürlich der Platzbedarf der Schaltung.

Um die Restenergie zu verwerten kann sie auch der Primärinduktivität zugeführt werden. Hierzu kann statt der RCD-Snubberschaltung parallel zur Primärinduktivität eine sogenannte Active-Clamp-Schaltung vorgesehen sein. Dabei werden ein weiterer Halbleiterschalter und ein Entladekondensator parallel zur Primärinduktivität geschaltet. Der weitere Halbleiterschalter ist in der Leitphase geöffnet und schließt mit Beginn der Sperrphase. Damit kann der Reststrom aus der Streuinduktivität in den Entladekondensator fließen, womit die Resteenergie im Entladekondensator als Spannungsüberhöhung zwischengespeichert wird. Da über den weiteren Halbleiterschalter ein Stromfluss in beide Richtungen möglich ist, entlädt der Entladekondensator die Spannungsüberhöhung über einen Rückstrom in die Primärinduktivität, welche auf die Sekundärinduktivität transformiert wird und sich zum Ausgangsstrom addiert. Damit erreicht die Entladekondensatorspannung wieder den üblichen Wert entsprechend der Ausgangsgleichspannung multipliziert mit dem Übersetzungsverhältnis. Somit kann die in der Streuinduktivität gespeicherte Restenergie verwertet und der Wirkungsgrad des Sperrwandlers erhöht werden. Es ist jedoch zusätzlich zum Halbleiterschalter ein weiterer Halbleiterschalter erforderlich, was entsprechend hohe Kosten verursacht. Zudem entsteht durch den weiteren Halbleiterschalter wiederum ein erhöhter Platzbedarf.

Es ist eine Aufgabe der gegenständlichen Erfindung den Wirkungsgrad eines Sperrwandlers bei geringem Schaltungsaufwand und Kostenaufwand zu erhöhen.

Diese Aufgabe wird gelöst, indem eine Speicherdiode mit einer Sperrverzugszeit von 200ns bis 5µs, vorzugsweise 300ns bis 3µs, und einer Durchlassrichtung gegen die Eingangsgleichspannung und ein zur Speicherdiode in Serie geschalteter Entladekondensator parallel zur Primärinduktivität geschaltet sind.

Die Aufgabe wird ebenso durch ein Verfahren gelöst, wobei beim Schalten von der Leitphase in die Sperrphase in einer Streuinduktivität des Speichertransformators gespeicherte Restenergie als Reststrom durch eine parallel zur Primärinduktivität geschaltete Serienschaltung aus einer Speicherdiode mit einer Sperrverzugszeit von 200ns bis 5µs, vorzugsweise 300 ns bis 3µs, und einem Entladekondensator fließt, wodurch sich eine Entladekondensatorspannung des Entladekondensators um eine Spannungsüberhöhung erhöht und der Entladekondensator die Spannungsüberhöhung während der Sperrverzugszeit zumindest teilweise als Rückstrom in Sperrrichtung der Speicherdiode in die Primärinduktivität entlädt, wobei die Primärwindung den Rückstrom auf die Sekundärwindung transformiert, wo sich der transformierte Rückstrom zum Sekundärstrom addiert.

Vorzugsweise entlädt der Entladekondensator die Spannungsüberhöhung während der Sperrverzugszeit vollständig als Rückstrom in Sperrrichtung der Speicherdiode in die Primärinduktivität.

Durch die Verwendung einer Speicherdiode mit einer ausreichend hohen Sperrverzugszeit von 200 ns bis 5 µs, vorzugsweise 300 ns bis 3µs, besonders vorzugsweise 500 ns bis 2 µs, ist es möglich die in der Streuinduktivität gespeicherte Restenergie zu verwerten und dem Ausgang zuzuführen. Beim Schalten von der Leitphase in die Sperrphase entlädt sich die Streuinduktivität als Reststrom über die Speicherdiode in den Entladekondensator, wodurch die Restenergie als Spannungsüberhöhung im Entladekondensator zwischengespeichert wird. Die Speicherdiode weist eine Durchlassrichtung, welche gegen die Eingangsgleichspannung und damit auch gegen die Entladekondensatorspannung gerichtet ist, auf.

Bei Verwendung einer üblichen Schaltdiode statt der Speicherdiode wäre somit ein Entladen der Spannungsüberhöhung über die Primärinduktivität nicht möglich, da hierzu ein Stromfluss in Sperrrichtung der Schaltdiode erforderlich wäre. Dies ist jedoch nicht möglich, bzw. tritt während der kurzen Sperrverzugszeit einer Schaltdiode lediglich in einem vernachlässigbaren Ausmaß auf. Aus diesem Grund muss bei einer RCD-Snubberschaltung ein Snubberwiderstand parallel zum Snubberkondensator geschaltet werden. Damit wird ein Entladen der Spannungsüberhöhung der Snubberkondensatorspannung über den Snubberwiderstand ermöglicht, wodurch die Restenergie am Snubberwiderstand in Wärme umgewandelt wird.

Die erfindungsgemäß verwendete Speicherdiode ermöglicht jedoch während der Sperrverzugszeit eine Entladung der Spannungsüberhöhung als Rückstrom gegen die Sperrrichtung der Speicherdiode in die Primärinduktivität. Damit wird die im Entladekondensator zwischengespeicherte Restenergie als Rückstrom über die Primärinduktivität auf die Sekundärinduktivität transformiert, wo sich der transformierte Rückstrom entsprechend dem Übersetzungsverhältnis zum Sekundärstrom addiert.

Ein Rückstrom gegen die Sperrrichtung einer Diode, insbesondere einer Schaltdiode für Schaltanwendungen, ist üblicherweise unerwünscht, da der Rückstrom zu zusätzlichen Verlusten führt. Daher weisen Snubberdioden eine ausreichend geringe Sperrverzugszeit im Bereich von 30 ns bis 200 ns auf. Erfindungsgemäß ist jedoch eine hohe Sperrverzugszeit, im Bereich von 200 ns bis 5 µs erwünscht. Der durch eine Sperrverzugsladung hervorgerufene Rückstrom während der Sperrverzugszeit verbessert somit den Wirkungsgrad des Sperrwandlers. Als Speicherdiode kann beispielsweise eine Gleichrichterdiode, welche ansonsten für 50Hz oder 60Hz Anwendungen eingesetzt wird, verwendet werden. Da derartige Gleichrichterdioden normalerweise bei dieser vergleichsweise geringen Frequenz von 50Hz, bzw. 60Hz betrieben werden, weisen Gleichrichterdioden üblicherweise eine ausreichend hohe Sperrverzugszeit auf. Es können natürlich auch andere Diodenarten, wie PIN-Dioden, etc., mit einer ausreichend hohen Sperrverzugszeit, als Speicherdioden eingesetzt werden.

Damit ähnelt die Funktionsweise der erfindungsgemäßen Schaltung einer Active-Clamp-Schaltung. Es ist jedoch im Gegensatz dazu kein weiterer Halbleiterschalter erforderlich, womit natürlich auch keine weiteren Bauteile zur Ansteuerung eines weiteren Halbleiterschalters erforderlich sind. Stattdessen wird eine vergleichsweise kostengünstige Speicherdiode verwendet, welche auch einen geringeren Platzbedarf aufweist und zudem nicht aktiv angesteuert werden muss.

Vorteilhafterweise weist der Entladekondensator eine Kapazität von im Bereich von 100 pF bis 330 nF, vorzugsweise 470 pF bis 100 nF, besonders vorzugsweise 1-10 nF, auf. Damit ist der Sperrwandler für ein Schaltnetzteil mit einer Leistung von 30 Watt, eine Eingangsgleichspannung von 1000 V und einer Schaltfrequenz von 40 kHz dimensioniert.

Die Kapazität des Entladekondensators beeinflusst die Höhe der aufgrund des Reststroms entstehenden Spannungsüberhöhung und die Dauer der Übertragung auf die Sekundärseite.

Vorteilhafterweise ist eine Entladeschaltung für den Entladekondensator vorgesehen. Die Entladeschaltung kann dazu dienen, einen nach der Sperrverzugszeit der Speicherdiode ggf. am Entladekondensator verbleibenden Teil der Spannungsüberhöhung abzubauen.

Als Entladeschaltung kann ein Entladewiderstand parallel zum Entladekondensator geschaltet sein, der vorteilhafterweise einen elektrischen Widerstand zwischen 1,8 kΩ und 18 MΩ, vorzugsweise zwischen 10 kΩ und 5,6 MΩ und besonders vorzugsweise zwischen 33 kΩ und 1MΩ aufweist.

Alternativ sind auch Entladeschaltungen mit Z-Diode denkbar, beispielsweise eine Serienschaltung von Entladewiderstand und Z-Diode (RZCD-Konfiguration genannt). Bei einer solchen Konfiguration weist der Entladewiderstand einen elektrischen Widerstand von vorteilhafterweise 100 Ω bis 1MΩ, vorzugsweise von 1 kΩ bis 100 kΩ und besonders vorzugsweise von 2,2 kΩ bis 47 kΩ auf. Die Werte des Entladewiderstands werden je nach vorgesehener Leistung des Sperrwandlers, Schaltfrequenz, usw. werden entsprechend dimensioniert.

Damit kann ein am Entladekondensator verbleibender Teil der Spannungsüberhöhung über den Entladewiderstand abgebaut werden. Die Wahl des Wertes des Widerstands ist dabei von der Restenergie abhängig, die nicht rückgespeist werden kann. Da üblicherweise nur ein kleiner Teil der Spannungsüberhöhung nach der Sperrverzugszeit am Entladekondensator verbleibt (vorzugsweise verbleibt gar keine Spannungsüberhöhung) und damit ein Großteil der Restenergie, vorzugsweise über 90%, als Rückstrom in die Primärinduktivität rückgespeist wird, kann der Entladewiderstand höherohmig (wie oben angegeben) gewählt werden. Dementsprechend ist der Rückstrom über den Entladewiderstand in Relation zum Rückstrom in die Primärinduktivität klein.

Vorzugsweise wird die Restenergie vollständig als Rückstrom in die Primärinduktivität rückgespeist, womit nach der Sperrverzugszeit keine Spannungsüberhöhung am Entladekondensator verbleibt und kein Rückstrom durch den Entladewiderstand fließen muss.

In einer RCD-Snubberschaltung wird aufgrund der geringen Sperrverzugszeit keine Restenergie, oder bestenfalls ein vernachlässigbarer Teil im Bereich um etwa 1% der Restenergie, in Sperrrichtung der Snubberdiode in die Primärinduktivität übertragen.

Es wird im Vergleich zu einer oben beschriebenen RCD-Snubberschaltung mit einem Snubberwiderstand, welcher einen geringeren elektrischen Widerstand als der Entladewiderstand aufweist, und einer Schaltdiode, welche eine geringere Sperrverzugszeit als die Speicherdiode aufweist, weniger Leistung im Entladewiderstand umgesetzt.

Der Speicherkondensator der erfindungsgemäßen Schaltung hat grundlegend eine ähnliche Funktion wie der Snubberkondensator der RCD-Snubberschaltung, da diese aufgrund des Rückstromes bzw. Snubberstroms eine Spannungsüberhöhung erfahren. Die Spannungsüberhöhung des Speicherkondensators wird jedoch primär als Rückstrom über die Primärinduktivität auf die Sekundärinduktivität transformiert, wohingegen die Spannungsüberhöhung des Snubberkondensators zur Gänze in den Snubberwiderstand entladen wird - abgesehen von gegebenenfalls auftretenden Strömen in Sperrrichtung der Schaltdiode während der vergleichsweise kurzen Sperrverzugszeit.

Vorzugweise wird bei einem Sekundärstrom von Null von der Sperrphase in die Leitphase geschaltet, besonders vorzugsweise wenn der Sekundärstrom Null erreicht hat und zusätzlich eine Verzögerungszeit abgelaufen ist. Das entspricht einem Lückbetrieb des Sperrwandlers.

Es kann bei einem Minimum einer am Halbleiterschalter auftretenden Schalterspannung von der Sperrphase in die Leitphase geschaltet werden, womit ein Quasiresonanter (QR)-Betrieb realisiert wird. Damit kann die Schalterspannung am Halbleiterschalter zum Schaltzeitpunkt in die Leitphase gering gehalten werden, womit die Schaltungsverluste am Halbleiterschalter minimiert werden. Das Schalten während des Minimums der Schalterspannung kann beispielsweise durch eine geeignete Vorgabe der Verzögerungszeit gesteuert werden.

Vorzugsweise wird innerhalb einer Taktperiode abwechselnd von einer Leitphase in eine Sperrphase geschaltet und der Sperrwandler vorzugsweise mit einer Taktperiode von 2 µs bis 50µs betrieben.

Eine Taktperiode von 2 µs bis 50µs entspricht einer Schaltfrequenz fs von 20 kHz bis 500 kHz. Die Wahl der Taktperiode kann beispielsweise abhängig von der vorgesehenen Leistung des Sperrwandlers, der Eingangsgleichspannung, etc., erfolgen.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
- Fig.1a, b, c: einen Sperrwandler mit einer RCD-Snubberschaltung,
- Fig.2a, b, c: einen Sperrwandler mit einer erfindungsgemäßen Beschaltung,
- Fig.3a, b: die erfindungsgemäße Beschaltung mit einem Entladewiderstand,
- Fig.4: einen zeitlichen Spannungsverlauf und Stromverlauf.

Ein Sperrwandler 1 dient dazu eine Eingangsgleichspannung Ue an Eingangsklemmen A+, A- in eine Ausgangsgleichspannung Ua an Ausgangsklemmen B+, B- zu wandeln. Es ist natürlich auch eine Wechselspannung als Energielieferant am Eingang möglich, wobei diese Wechselspannung jedoch zu einer Eingangsgleichspannung Ue gleichgerichtet werden muss. Es ist im Sperrwandler 1 ein Speichertransformator 2 mit einem Eisenkern vorgesehen, welcher eine Primärinduktivität L1 und eine mit der Primärspule L1 magnetisch gegengekoppelte Sekundärinduktivität L2 umfasst. Im Speichertransformator 2 wird die von der Primärinduktivität L1 zur Sekundärinduktivität L2 zu übertragende Energie E zwischengespeichert, was beispielsweise durch Vorsehen eines Luftspalts im Eisenkern, realisiert werden kann.

Es ist im Sperrwandler 1 ein Halbleiterschalter Q1 vorgesehen, welcher beispielsweise als Bipolartransistor, MOSFET, IGBT, etc. ausgeführt ist. Der Halbleiterschalter Q1 ist mit der Primärinduktivität L1 in Serie an die Eingangsklemmen A+, A-, an welchen die Eingangsgleichspannung Ue anliegt, geschaltet. Der Sperrwandler 1 befindet sich somit in einer Sperrphase PS, wenn der Halbleiterschalter Q1 gesperrt ist und in einer Leitphase PL, wenn der Halbleiterschalter Q1 leitend ist. Die Steuerung des Halbleiterschalters Q1 erfolgt durch eine Steuereinheit 5, welche abwechselnd den Halbleiterschalter Q1 leitend und sperrend schaltet.

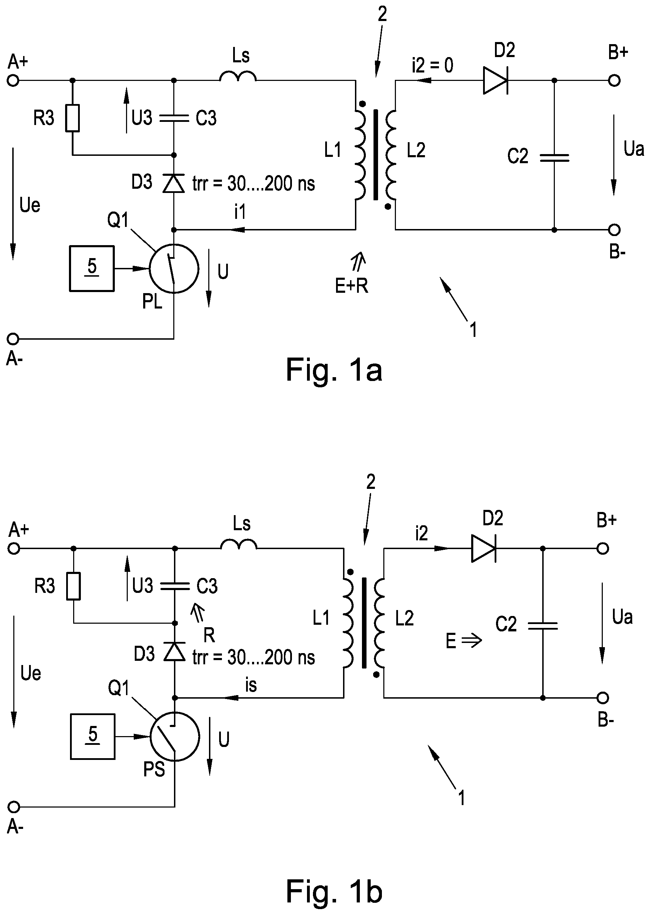

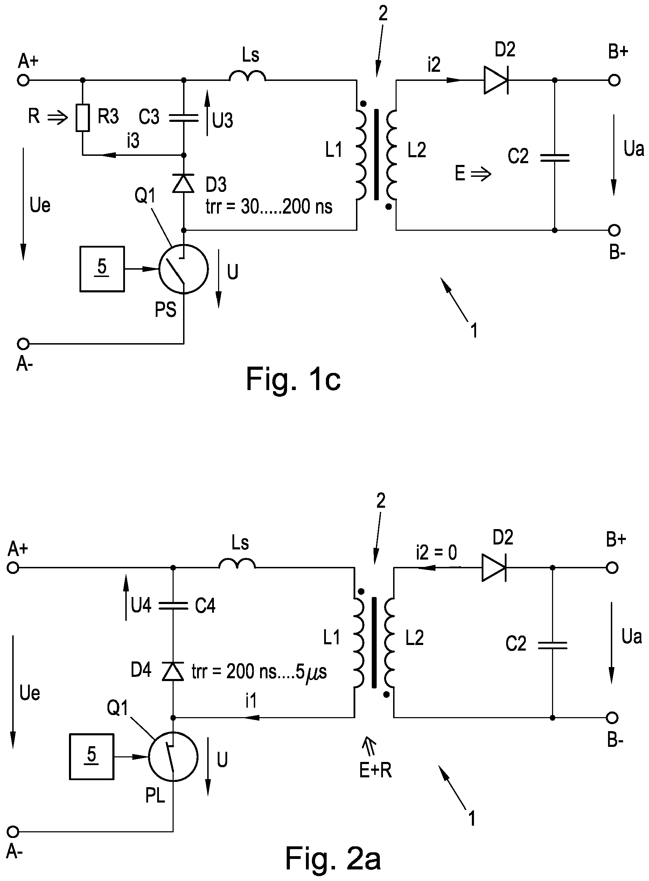

In den Fig.1a und 2a ist jeweils ein Sperrwandler 1 in der Leitphase PL dargestellt. In der Leitphase PL ist eine an den Eingangsklemmen A+, A- anliegende Eingangsgleichspannung Ue über den Halbleiterschalter Q1 mit der Primärinduktivität L1 verbunden, wobei die Schalterspannung U am Halbleiterschalter Q1 vernachlässigt werden kann. Es fließt ein linear ansteigender Primärstrom i1 durch die Primärwindung L1 und den Halbleiterschalter Q1. Dies ergibt sich aus dem bekannten integralen Verhalten eines Stroms durch eine Induktivität, an welcher eine Spannung anliegt. So verursacht das Anliegen der Eingangsgleichspannung Ue an der Primärinduktivität L1 einen linear ansteigenden Primärstrom i1, was auf die Hauptinduktivität des Speichertransformators zurückzuführen ist. Die Spannung an der Primärinduktivität L1 wird auf die Sekundärinduktivität L2 transformiert. Die Sekundärinduktivität L2 ist mit einer Ausgangsdiode D2 in Serie geschaltet. Diese Serienschaltung der Sekundärinduktivität L2 und der Ausgangsdiode ist mit den Ausgangsklemmen B+, B- verbunden. Die Durchflussrichtung der Ausgangsdiode D2 ist jedoch entgegen der Spannung an der Sekundärinduktivität L2, welche in der Leitphase von der Spannung an der Primärinduktivität L1 transformiert wird, gerichtet. Damit wird die Ausgangsdiode D2 in der Leitphase PL in Sperrrichtung betrieben und es fließt in der Leitphase PL kein Sekundärstrom i2 durch die Sekundärinduktivität L2. Vielmehr wird durch den Fluss des Primärstroms i1 durch die Primärinduktivität L1 Energie E in einer Hauptinduktivität des Speichertransformators T gespeichert. Es ist zudem ein Ausgangskondensator C2 mit den Ausgangsklemmen B, d.h. parallel zur Serienschaltung der Sekundärinduktivität L2 und der Ausgangsdiode D2 verbunden. Der Ausgangskondensator C2 stellt somit durch eine vorhandene Restladung die Ausgangsgleichspannung Ua an den Ausgangsklemmen B zur Verfügung.

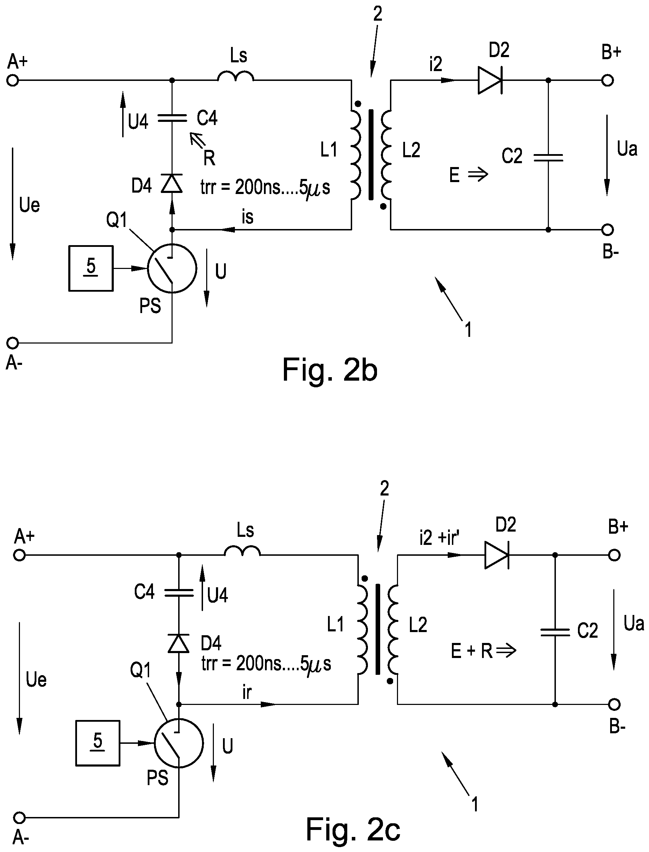

In den Fig.1b und 2b ist der Sperrwandler 1 jeweils in der Sperrphase PS dargestellt. In der Sperrphase PS ist der Halbleiterschalter Q1 geöffnet, womit der Primärstrom i1 durch die Primärinduktivität L1 in Form eines Reststroms is abklingt. Die in der Hauptinduktivität Lh gespeicherte Energie E fließt als Sekundärstrom i2 durch die Sekundärinduktivität L2. Da die Eingangsgleichspannung Ue nicht mehr an der Primärinduktivität L1 anliegt, wird keine Spannung auf die Sekundärinduktivität L2 transformiert, womit die Ausgangsdiode D2 nicht mehr in Sperrrichtung betrieben wird. Dadurch kann der Sekundärstrom i2 aus dem Speichertransformator 2 über die Sekundärinduktivität L2 durch die Ausgangsdiode D2 fließen. Der Sekundärstrom i2 fällt linear ab und fließt durch die Ausgangskapazität C2 und durch die Ausgangsklemmen B+, B- in eine ggf. angeschlossene Last.

Damit wird die Ausgangskapazität C2, welche sich in der Leitphase PL (und in einem QR-Betrieb während der Schwingphase PS2) zum Teil entladen hatte, wieder aufgeladen und stellt damit weiterhin die Ausgansspannung Ua an den Ausgangsklemmen B+, B- zur Verfügung. Dabei wird die an der Sekundärinduktivität L2 anliegende Ausgangsgleichspannung Ua auf die Primärinduktivität L1 transformiert, wobei sich an der Primärinduktivität L1 eine Spannung in der Höhe der Ausgangsgleichspannung Ua multipliziert mit dem Übertragungsverhältnis r ergibt. Diese transformierte Spannung addiert sich am Halbleiterschalter Q1 zu der Eingangsgleichspannung Ue hinzu.

Beim Übergang von der Leitphase LS in die Sperrphase PS ist in einer Streuinduktivität Ls des Speichertransformators 2 jedoch noch Restenergie R gespeichert, welche abgeleitet werden muss. Dazu ist der in Fig. 1a, b dargestellte Sperrwandler mit einer RCD-Snubberschaltung als Entlastungsnetzwerk versehen, um einen Reststrom is aus der Streuinduktivität Ls abzuleiten. Die RCD-Snubberschaltung umfasst einen Snubberwiderstand R3 und eine zum Snubberwiderstand R3 parallel geschaltete Snubberkapazität C3. Die Parallelschaltung des Snubberkondensators C3 und des Snubberwiderstands R3 wird in Serie zu einer Snubberdiode D3 geschaltet und die RCD-Snubberschaltung parallel mit der Primärinduktivität L1 des Speichertransformators T verbunden. Die Durchlassrichtung der Snubberdiode D3 ist gegen die Eingangsgleichspannung Ue gerichtet, womit die Eingangsgleichspannung Ue in der Leitphase PL, d.h. bei geschlossenem Halbleiterschalter Q1 (Fig. 1a) keinen Strom durch die RCD-Snubberschaltung hervorruft. Der Primärstrom fließt dabei durch die Primärinduktivität L1 und die Snubberkapazität C3 ist auf eine Snubberspannung U3 geladen.

Wird der Sperrwandler 1 mit der RCD-Snubberschaltung von der Leitphase PL in die Sperrphase PS umgeschaltet, d.h. der Halbleiterschalter Q1 geöffnet (Fig. 1b), so liegt an der Primärinduktivität L1 nicht mehr die Eingangsgleichspannung Ue, sondern eine gegen die Eingangsgleichspannung Ue gerichtete Snubberspannung U3 an, welche der Ausgangsgleichspannung Ua multipliziert mit dem Übersetzungsverhältnis r entspricht. Damit ist die Snubberdiode D3 nicht mehr gesperrt und es fließt ein Reststrom is aus der Streuinduktivität Ls (die einen parasitären Bestandteil der Primärinduktivität L1 darstellt) über die Snubberdiode D3 in die Snubberkapazität C3. Damit erfährt die die Snubberspannung U3 eine Spannungsüberhöhung Us. Die Spannung an der Primärinduktivität L1 erfährt somit neben einem Wert entsprechend der Ausgangspannung multipliziert mit dem Übersetzungsverhältnis reine additive Spannungsüberhöhung Us.

Die Snubberspannung U3 wirkt gegen die Durchlassrichtung der Snubberiode D3, womit die Snubberdiode D3 keinen bzw. nur einen vernachlässigbaren Rückfluss eines Rückstroms ir in die Primärinduktivität L1 erlaubt. Es ist jedoch ein parallel zum Snubberkondensator C3 geschalteter Snubberwiderstand R3 vorgesehen, über welchen der Snubberkondensator C3 die Spannungsüberhöhung Us der Snubberspannung U3 als Snubberstrom i3 entlädt, wie es in Fig. 1c dargestellt ist. Die Restenergie R wird somit am Snubberwiderstand R3 in Wärme umgewandelt. Damit sinkt der Wirkungsgrad des Sperrwandlers um bis zu 3%. Als Snubberdiode D3 wird üblicherweise eine Schaltdiode verwendet, welche eine ausreichend geringe Sperrverzugszeit trr im Bereich von 30 bis 200 ns aufweist um den Halbleiterschalter Q1 vor hohen Einschaltströmen zu bewahren.

Es ist wünschenswert die Restenergie R der Streuinduktivität Ls sinnvoll zu verwerten, anstatt sie in Wärme umzuwandeln. Fig. 2a, b, c stellt einen erfindungsgemäßen Sperrwandler 1 dar, welcher eine Verwertung der in der Streuinduktivität Ls gespeicherten Restenergie R ermöglicht. Es wird eine Speicherdiode D4 in Kombination mit einem in Serie geschalteten Entladekondensator C4 verwendet.

In der Leitphase PL (Fig. 2a) verbindet der geschlossene Halbleiterschalter Q1 die Eingangsgleichspannung Ue mit der Primärinduktivität L1 und mit der parallel zur Primärinduktivität L1 geschalteten Serienschaltung von Entladekondensator C4 und Speicherdiode D4. Die Speicherdiode D4 sperrt, da sie gegen die Eingangsgleichspannung Ue gepolt ist, wodurch kein Strom durch die Speicherdiode D4 und den Entladekondensator C4 fließt. Am Entladekondensator C4 liegt die Entladekondensatorspannung U4, welche im Wesentlichen konstant ist einem Wert entsprechend der Ausgangsgleichspannung Ua multipliziert mit dem Übersetzungsverhältnis r des Speichertransformators 2 entspricht.

Geht der erfindungsgemäße Sperrwandler 1 in die Sperrphase PS über, d.h. wird der Halbleiterschalter Q1 geöffnet (Fig. 2b), so fließt die in der Streuinduktivität Ls gespeicherte Restenergie R als Reststrom is über die Speicherdiode D4 in den Entladekondensator C4, sodass die Entladekondensatorspannung U4 eine Spannungserhöhung Us erfährt, analog zu einer RCD-Snubberschaltung entsprechend Fig. 1. Bei einer Ausgangsgleichspannung Ua von 15V und einem Übersetzungsverhältnis r von 12 ergibt sich beispielsweise eine Entladekondensatorspannung U4 von 180V, welche zusätzlich eine Spannungsüberhöhung Us erfährt. Die Höhe der Spannungsüberhöhung Us hängt von der Kapazität des Entladekondensators C4 ab.

Der Entladekondensator C4 entlädt in der erfindungsgemäßen Schaltung jedoch anschließend die Spannungsüberhöhung Us über die Speicherdiode D4, obwohl die Speicherdiode D4 eigentlich in diese Richtung sperrt (Fig. 2c). Dies wird durch eine Wahl einer ausreichend hohen Sperrverzugszeit trr der Speicherdiode D4 ermöglicht. Der Rückstrom ir in Sperrrichtung der Speicherdiode D4 wird während der Sperrverzugszeit trr durch die Sperrverzugsladung Qrr hervorgerufen. Damit unterscheidet sich die Speicherdiode D4 wesentlich von einer Snubberdiode D3 entsprechend einer RCD-Snubberschaltung (vgl. Fig. 1a, b, c), welche als Schaltdiode mit Sperrverzugszeiten trr von unter 200 ns ausgeführt ist. Innerhalb der erfindungsgemäßen Sperrverzugszeit trr von 200ns bis 5µs ist ein Fluss des Rückstroms ir in Sperrrichtung der Speicherdiode D4 möglich. Das bedeutet, dass der Entladekondensator C4 die Spannungsüberhöhung Us gegen die Sperrrichtung der Speicherdiode D4 entlädt und einen Rückstrom ir in der Primärinduktivität L1 hervorruft. Der Rückstrom ir wird auf die Sekundärinduktivität L2 transformiert, wo sich der transformierte Rückstrom ir' wiederum zum Sekundärstrom i2 addiert. Damit wird die Restenergie R auf die Sekundärseite des Speichertransformators 2 transferiert. Wie lange das Entladen der Spannungsüberhöhung Us aus dem Entladekondensator C4 und die Übertragung des Rückstroms ir als transformierter Rückstrom ir' auf die Sekundärseite dauert, hängt von der Kapazität des Entladekondensators C4 und der Streuinduktivitäten des Speichertransformators (auf der Primärseite und auf der Sekundärseite) ab.

Der erfindungsgemäße Entladekondensator C4 hat eine ähnliche Funktion wie ein Snubberkondensator C3 einer RCD-Snubberschaltung. Der Snubberkondensator C3 entlädt jedoch die Spannungsüberhöhung Us zur Gänze in den Snubberwiderstand R3, wogegen der Entladekondensator C4 die Spannungsüberhöhung Us primär als Rückstrom ir in die Primärinduktivität L1 entlädt, welcher als transformierter Rückstrom ir' auf die Sekundärinduktivität L2 transformiert wird.

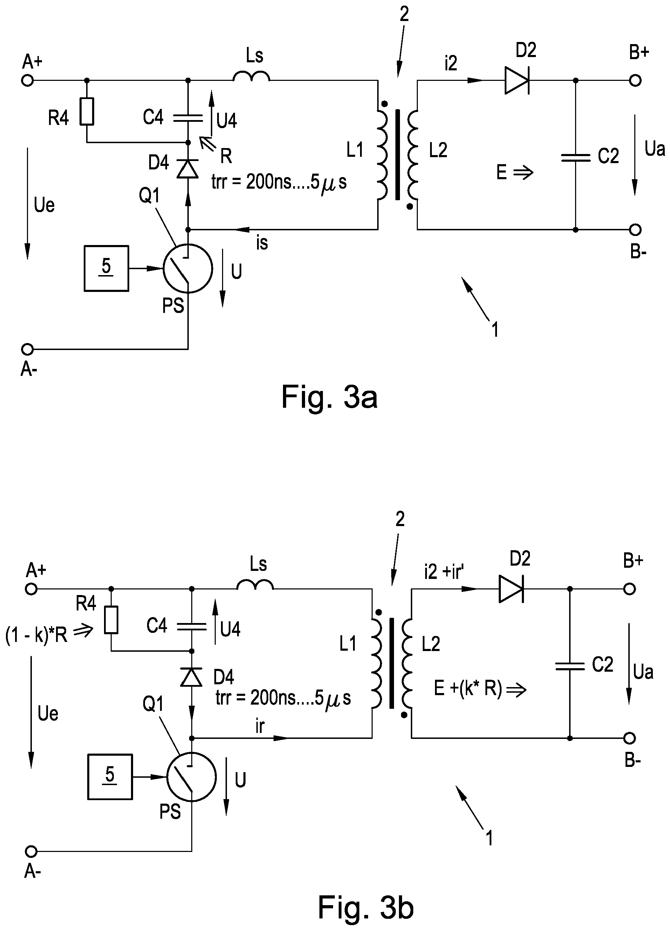

In Fig. 3a, b ist die erfindungsgemäße Schaltung dargestellt, welche zudem einen optionalen Entladewiderstand R4 als Entladeschaltung für den Entladekondensator C4 umfasst. Die Entladeschaltung kann auch auf andere Weise ausgestaltet sein, beispielsweise als ZenerDiode, einer Kombination von Entladewiderstand und Zehner-Diode und/oder ähnliches. In Fig. 3a ist die Sperrphase PS dargestellt, wobei der Reststrom is analog zu Fig.2b von der Primärinduktivität L1 in den Entladekondensator C4 fließt und eine Spannungsüberhöhung Us der Entladekondensatorspannung U4 verursacht. Daraufhin fließt entsprechend Fig. 3b, analog zu Fig. 2c der Rückstrom ir vom Entladekondensator C4 in die Primärinduktivität L1. Damit entlädt der Entladekondensator C4 die Spannungsüberhöhung Us in Sperrrichtung der Speicherdiode D4, welche eine ausreichend hohe Sperrverzugszeit trr aufweist, als Rückstrom ir in die Primärinduktivität L1. Die Sperrverzugszeit trr bzw. die Sperrverzugsladung Qrr kann beispielsweise auch durch parallele Speicherdioden D4 erhöht werden. Der Rückstrom ir wird auf die Sekundärinduktivität L2 transformiert, wo sich der transformierte Rückstrom ir' zum Sekundärstrom i2 addiert. Damit wird ebenso die Restenergie R auf die Sekundärseite des Speichertransformators 2 transferiert.

Die Entladeschaltung sorgt hier zusätzlich dafür, dass der Entladekondensator C4 nach dem Fließen des Rückstroms ir, d.h. nach der Sperrverzugszeit trr, gegebenenfalls verbleibende Reste der Spannungsüberhöhung Us entlädt. Die Entladeschaltung muss natürlich derart dimensioniert werden, dass primär eine verbleibende Spannungsüberhöhung Us entladen wird, jedoch die Entladekondensatorspannung U4 nicht merklich unter den vorgesehen Wert in der Höhe der Ausgangsspannung Ua multipliziert mit dem Übertragungsverhältnis r entlädt.

Im Gegensatz dazu ist ein Snubberwiderstand R3 einer RCD-Snubberschaltung (Fig. 1) mit einem geringeren elektrischen Widerstand ausgeführt, da ein vollständiges Entladen der Spannungsüberhöhung Us über den Snubberwiderstand R3 erforderlich ist.

Es wird sowohl bei der RCD-Snubberschaltung, als auch bei der erfindungsgemäßen Schaltung eine am Snubberkondensator C3/Entladekondensator C4 auftretende Spannungsüberhöhung Us entladen. Damit ergibt sich für die Snubberspannung U3/Entladekondensatorspannung U4 ein Wert, der im Wesentlichen der Ausgangspannung Ua multipliziert mit dem Übertragungsverhältnis r entspricht. In der erfindungsgemäßen Schaltung erfolgt die Entladung der Spannungsüberhöhung Us jedoch im Wesentlichen in Sperrrichtung der Speicherdiode D4 in die Primärinduktivität L1, womit die Restenergie R auf die Sekundärinduktivität L2 transformiert wird. In der RCD-Snubberschaltung erfolgt die Entladung über den Snubberwiderstand R3, wo die Restenergie R in Wärme umgewandelt wird.

Das Tastverhältnis des Halbleiterschalters Q1 zwischen Sperrphase PS und Leitphase PL kann grundlegend variabel oder fest vorgesehen sein. Ein Sperrwandler 1 kann daher in unterschiedlichen Betriebsarten betrieben werden. Wird von der Sperrphase PS in die Leitphase PL geschaltet bevor der Sekundärstrom i2 Null erreicht, so wird diese Betriebsart als kontinuierlicher Modus (Continuous Current Mode, CCM). Eine als Lückbetrieb (Discontinuous Current Mode, DCM) bezeichnete Betriebsart zeichnet sich dadurch aus, dass erst in die Leitphase geschaltet wird, nachdem der Sekundärstrom i2 auf Null abgefallen ist. Dadurch wird bei einem Schalten in die Leitphase PL die am Halbleiterschalter Q1 auftretende Schaltverlustleistung verringert. Es muss im Lückbetrieb eine ausreichende Schaltperiodendauer ts bis zum Abklingen des Sekundärstroms i2 auf Null sichergestellt werden.

Ein quasiresonanter Betrieb (QR-Betrieb) stellt eine spezielle Unterart des Lückbetriebs dar, wobei die Schaltverlustleistung minimiert wird. Im QR-Betrieb wird bei einer minimalen Schalterspannung U von der Sperrphase PS in die Leitphase PL geschaltet.

Stattdessen können die Schaltzeitpunkte des Halbleiterschalters Q1 natürlich auch fest vorgegeben sein, was als Fixfrequenzbetrieb bezeichnet wird.

Vorzugsweise liegt eine Taktperiode T, welche den Zeitraum vom Beginn einer Sperrphase PS bis zum Beginn der nächsten Sperrphase PS des Sperrwandlers beschreibt, im Bereich von 2µs bis 50µs. Damit ergeben sich als Inverse der Taktperiode T Schaltfrequenzen fs von 20 kHz bis 500 kHz. Im Leerlauf kann die Schaltfrequenz fs auch reduziert werden, um die Verluste zu minimieren. Taktperiode T, bzw. Schaltfrequenz fs können grundlegend fest oder variabel sein.

Im QR-Betrieb ist die Schaltfrequenz fs von der Eingangsspannung Ua und der Abgabeleistung abhängig. Im QR-Betrieb ist die Schaltfrequenz (z.B. je nach gewünschter Leistung) grundlegend variabel und kann auch außerhalb des genannten Bereichs sein.

Liegt die Dauer der Sperrphase PS über der Sperrverzugszeit trr der Speicherdiode D4, so kann sichergestellt werden, dass die Speicherdiode D4 beim Übergang in die Leitphase PL sperrt und keinen durch die wieder zugeschaltete Eingangsgleichspannung Ue hervorgerufenen Strom führt.

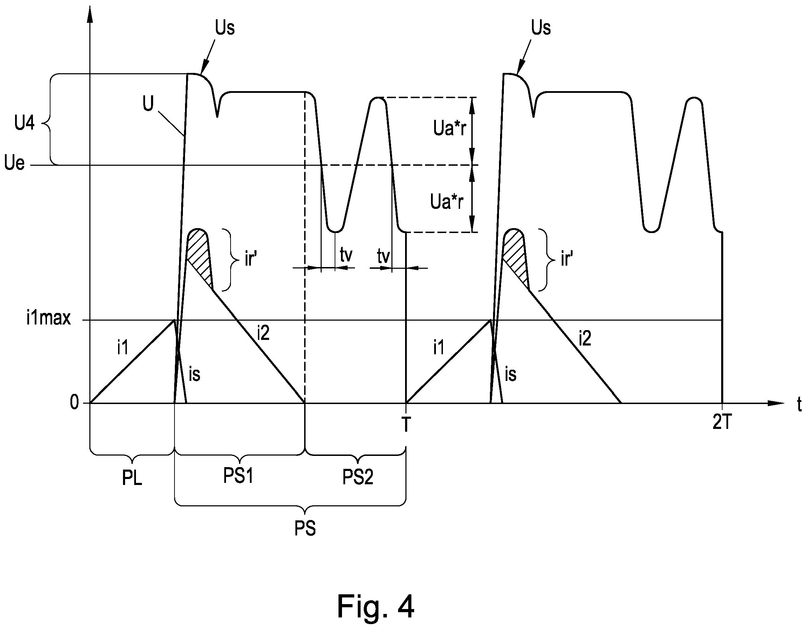

Fig. 4 stellt die Sperrphasen PS und Leitphasen PL eines erfindungsgemäßen Sperrwandlers 1 dar. Der Sperrwandler 1 wird hier beispielhaft im QR-Betrieb betrieben. Es ist zu Beginn ersichtlich, dass in der Leitphase PL keine Schalterspannung U am Halbleiterschalter Q1 anliegt, da dieser geschlossen ist. Es fließt ein linear ansteigender Primärstrom i1 durch die Primärinduktivität L1 und den Halbleiterschalter Q1. Da die Speicherdiode D4 in Sperrrichtung betrieben wird, fließt kein Strom durch die Speicherdiode D4.

Überschreitet der Primärstrom i1 eine Stromschwelle i1 max, so wird der Sperrwandler 1 über die Steuereinheit 5 durch Öffnen des Halbleiterschalters Q1 in die Sperrphase PS geschaltet. Die Stromschwelle i1max wird vorzugsweise im laufenden Betreib angepasst, um eine konstante Ausgangsgleichspannung Ua zu erreichen. Die Sperrphase PS ist hier aufgrund des QR-Betriebs in eine Abklingphase PS1 und eine Schwingphase PS2 aufgeteilt. Zu Beginn der Sperrphase PS und damit zu Beginn der Abklingphase PS1 sinkt der Primärstrom i1 in Form des Reststroms is auf Null. Während dieses Absinkens fließt der Reststrom is durch die Speicherdiode D4 und den Entladekondensator C4, wodurch die Schalterspannung U am Halbleiterschalter Q1 auf die Summe der Eingangsgleichspannung Ue und der um die Spannungsüberhöhung Us erhöhten Entladekondensatorspannung U4 ansteigt. Es ist zudem ersichtlich, dass zum Zeitpunkt des Umschaltens in die Sperrphase PS die Schalterspannung U das Maximum erreicht und daraufhin der Sekundärstrom i2 steil ansteigt. Der Sekundärstrom i2 erreicht im Wesentlichen sein Maximum bei einem Wert, welcher ohne Berücksichtigung von Verlusten der Stromschwelle i1max multipliziert mit dem Übertragungsverhältnis r entspricht.

In der realen Schaltung treten unter anderem natürlich Verluste auf, welche verhindern, dass der Sekundärstrom i2 tatsächlich diesen Wert erreicht.

Erfindungsgemäß fließt aufgrund der Sperrverzugszeit trr von 200 ns bis 5µs der Speicherdiode D4 ein Rückstrom ir vom Entladekondensator C4 in die Primärinduktivität L1. Der Rückstrom ir wird auf die Sekundärinduktivität L2 transformiert und addiert sich somit als transformierter Rückstrom ir' als Stromüberhöhung zum Sekundärstrom i2. Aus dieser Stromüberhöhung resultiert also die Sperrverzugsladung Qrr gemäß der schraffierten Fläche. Die Sperrverzugsladung Qrr ist dabei jener Teil der Restenergie R, welcher während der Sperrverzugszeit trr in Sperrrichtung der Speicherdiode D4 übertragen werden kann und kann als k*F mit einem Faktor k, welcher üblicherweise zwischen 0,5 (d.h. 50% der Restenergie R wird als Sperrverzugsladung Qrr in Sperrrichtung der Speicherdiode D4 übertragen) und 1 (d.h. die gesamte Restenergie R wird als Sperrverzugsladung Qrr in Sperrrichtung der Speicherdiode D4 übertragen). Damit verbleibt (1-k)*R auf der Primärseite und wird am Entladewiderstand R4 in Wärme umgesetzt. Vorzugsweise ist der Faktor k zwischen 0,75 und 1, ganz besonders vorzugsweise zwischen 0,9 und 1.

Ist die Sperrverzugsladung Qrr ausreichend, so kann die Restenergie R zumindest größtenteils, vorzugsweise vollständig auf die Sekundärseite übertragen werden.

Üblicherweise wird jedoch ein kleiner Teil der Restenergie R im Entladewiderstand R4 umgesetzt.

Die Stromüberhöhung entspricht dabei somit grundlegend der Restenergie R, d.h.bzw. jener Energie, welche während der Sperrverzugszeit trr in Sperrrichtung der Speicherdiode D4 als Sperrverzugsladung Qrr übertragen werden kann. Die Sperrverzugsladung Qrr der Speicherdiode D4 ist also gemäß der schraffierten Fläche unter dem transformierten Rückstrom ir' ersichtlich und entspricht der Restenergie R, wenn die gesamte Restenergie auf die Sekundärseite übertragen wird, d.h. kein Teil der Restenergie in den Entladewiderstand R4 entladen wird.

Nach der Überhöhung sinkt der Sekundärstrom i2 linear ab und es reduziert sich auch die Schalterspannung U auf einen Wert entsprechend der Eingangsgleichspannung Ue plus der Ausgangsspannung Ua multipliziert mit dem Übertragungsverhältnis r. Die Schalterspannung U wird also um die Spannungserhöhung Us reduziert.

Der Sekundärstrom i2 fällt auf Null ab, womit die Abklingphase PS1 beendet wird. Erreicht der Sekundärstrom i2 Null, so beginnt die Schwingphase PS2 als zweite Teilphase der Sperrphase PS. Die Speicherdiode D4 sperrt nun vollständig. Es sinkt die Schalterspannung U auf ein Schwingungsminimum und schwingt daraufhin wieder auf ein Schwingungsmaximum. Das Schwingungsminimum der Schalterspannung U entspricht der Eingangsgleichspannung Ue minus der Ausgangsgleichspannung multipliziert mit dem Übertragungsverhältnis r. Das Schwingungsmaximum der Schalterspannung U entspricht der Eingangsgleichspannung Ue plus der Ausgangsgleichspannung multipliziert mit dem Übertragungsverhältnis r.

Im QR-Betrieb erfolgt ein Schalten in die Leitphase PL bei einem Minimum der Schalterspannung U. Das Spannungsminimum kann beispielsweise bestimmt werden, indem der Zeitpunkt erkannt wird, bei dem die Schalterspannung U der Eingangsgleichspannung Ue entspricht. Zu diesem Zeitpunkt weist der Speichertransformator 2 keine Spannung an der Primärinduktivität L1 bzw. Sekundärinduktivität L2 auf, was beispielsweise über eine Hilfswicklung am Speichertransformator 1 erkannt werden kann. Daraufhin wird nach einer Verzögerungszeit tv in die Leitphase PL geschaltet. Die Verzögerungszeit tv kann vorab bekannt sein und entspricht vorzugsweise der Dauer, in welcher die Schalterspannung U auf das Spannungsminimum sinkt.

Es ist im QR-Betreib durch das Schalten in die Leitphase PL während des Schwingungsminimums der Schalterspannung U gewährleistet, dass beim Übergang in die Leitphase PL eine Spannung an der Primärinduktivität L1 entgegen der Eingangsgleichspannung gerichtet ist, womit die Speicherdiode D4 sperrt. Ebenso ist im QR-Betrieb beim Schalten in die Leitphase PL der Sekundärstrom i2 grundlegend Null.

Es kann zudem entschieden werden ob bei einem ersten Schwingungsminimum der Schalterspannung U in die Sperrphase PS geschaltet wird oder auf ein später auftretendes Schwingungsminimum gewartet wird, um in die Sperrphase PS zu schalten. Die Anzahl der abzuwartenden Schwingungsperioden kann beispielsweise von der am Ausgang gewünschten Leistung abhängig sein. Je höher die geforderte Leistung ist, desto weniger Schwingungsperioden wird abgewartet, womit die Leistung des Sperrwandlers 1 über durch eine Ansteuerung des Halbleiterschalters Q1 durch die Steuereinheit 5 regelbar ist.

Das erfindungsgemäße Verfahren kann auch bei Sperrwandlern 1 mit mehreren Ausgängen, welche an unterschiedlichen Sekundärwicklungen L2 unterschiedliche Ausgangsgleichspannungen Ua liefern, verwendet werden. So können die Ausgangsgleichspannung Ua beispielsweise 5V und 9V, 12V und 15V oder 24V und 48V betragen. Der auf die Sekundärinduktivität L2 transformierte Rückstrom ir' fließt in die stärker belastete Sekundärinduktivität L2 und trägt damit dazu bei, dass Spannungsabweichungen bei Schieflasten ausgeglichen werden.

Die Dimensionierung des Entladekondensators C4 und ggf. des Entladewiderstands R4 ist von der erforderlichen Leistung des Sperrwandlers 1, sowie von der Eingangsgleichspannung Ue und der Schaltfrequenz fs des Halbleiterschalter Q1 abhängig.

Beispielsweise ist für einen erfindungsgemäßen Sperrwandler 1 mit einer Eingangsgleichspannung Ue von 1 kV, einer Leistung von 5 Watt und einer Schaltfrequenz fs von 20 kHz ein Entladekondensator C4 mit einer Kapazität von 180 pF bis 47 nF, vorzugsweise 420 pF bis 10 nF, und ein Entladewiderstand R4 mit einem ohmschen Widerstand von 33 kΩ bis 18 MΩ, vorzugsweise von 180 kΩ bis 5,6 MΩ, vorteilhaft.

Für einen erfindungsgemäßen Sperrwandler 1 mit einer Eingangsgleichspannung Ue von 1 kV, einer Leistung von 30 Watt und einer Schaltfrequenz fs von 40 kHz ist ein Entladekondensator C4 mit einer Kapazität von 470 pF bis 150 nF, vorzugsweise 1 nF bis 33 nF, und ein Entladewiderstand R4 mit einem ohmschen Widerstand von 5,6 kΩ bis 3,3 MΩ, vorzugsweise 33 kΩ bis 1 MΩ, vorteilhaft. Es kann somit beispielsweise ein Entladekondensator C4 mit einer Kapazität von 4,7 nF und ein Entladewiderstand R4 mit einem ohmschen Widerstand von 240 kΩ verwendet werden.

Für einen erfindungsgemäßen Sperrwandler 1 mit einer Eingangsgleichspannung Ue von 1 kV, einer Leistung von 100 Watt und einer Schaltfrequenz fs von 60 kHz ist ein Entladekondensator C4 mit einer Kapazität von 1 nF bis 330 nF, vorzugsweise 2,7 nF bis 68 nF, und ein Entladewiderstand R4 mit einem ohmschen Widerstand von 1,8 kΩ bis 820 kΩ, vorzugsweise 10 kΩ bis 330 kΩ,vorteilhaft.

Für einen erfindungsgemäßen Sperrwandler 1 mit einer Eingangsgleichspannung Ue von 325 V, einer Leistung von 5 Watt und einer Schaltfrequenz fs von 60 kHz ist ein Entladekondensator C4 mit einer Kapazität von 47 pF bis 18 nF, vorzugsweise 120 pF bis 3,3 nF, und ein Entladewiderstand R4 mit einem ohmschen Widerstand von 33 kΩ bis 18 MΩ, vorzugsweise 180 kΩ bis 5,6 MΩ, vorteilhaft.

Für einen erfindungsgemäßen Sperrwandler 1 mit einer Eingangsgleichspannung Ue von 325 V, einer Leistung von 30 Watt und einer Schaltfrequenz fs von 130 kHz ist ein Entladekondensator C4 mit einer Kapazität von 150 pF bis 47 nF, vorzugsweise 330 pF bis 10 nF, und ein Entladewiderstand R4 mit einem ohmschen Widerstand von 5,6 kΩ bis 3,3 MΩ vorzugsweise 33 kΩ bis 1 MΩ, vorteilhaft.

Für einen erfindungsgemäßen Sperrwandler 1 mit einer Eingangsgleichspannung Ue von 325 V, einer Leistung von 100 Watt und einer Schaltfrequenz fs von 130 kHz ist ein Entladekondensator C4 mit einer Kapazität von 470 pF bis 150 nF, vorzugsweise 1 nF bis 33 nF, und ein Entladewiderstand R4 mit einem ohmschen Widerstand von 1,8 kΩ bis 820 kΩ, vorzugsweise 10 kΩ bis 330 kΩ,vorteilhaft.

## Patentansprüche

1. Sperrwandler (1) umfassend einen Speichertransformator (2) mit einer Primärinduktivität (L1) und zumindest einer mit der Primärinduktivität (L1) magnetisch gekoppelten Sekundärinduktivität (L2), wobei Eingangsklemmen (A+, A-) für eine Eingangsgleichspannung (Ue) an einer Serienschaltung eines Halbleiterschalters (Q1) und der Primärinduktivität (L1) angeordnet sind und wobei Ausgangsklemmen (B+, B-) für eine Ausgangsgleichspannung (Ua) an einem parallel zu einer Serienschaltung der Sekundärinduktivität (L2) und einer Ausgangsdiode (D2) geschalteten Ausgangskondensator (C2) angeordnet sind, wobei eine Steuereinheit (5) zum abwechselnden Öffnen und Schließen des Halbleiterschalters (Q1) vorgesehen ist, **dadurch gekennzeichnet, dass** eine Speicherdiode (D4) mit einer Sperrverzugszeit (trr) von 200 ns bis 5 µs und einer Durchlassrichtung gegen die Eingangsgleichspannung (Ue) und ein zur Speicherdiode (D4) in Serie geschalteter Entladekondensator (C4) parallel zur Primärinduktivität (L1) geschaltet sind.

2. Sperrwandler (1) nach Anspruch 1, **dadurch gekennzeichnet, dass** die Sperrverzugszeit (trr) der Speicherdiode (D4) einen Wert von 300 ns bis 3 µs aufweist.

3. Sperrwandler (1) nach Anspruch 2, **dadurch gekennzeichnet, dass** die Sperrverzugszeit (trr) der Speicherdiode (D4) einen Wert von 500 ns bis 2 µs aufweist.

4. Sperrwandler (1) nach einem der Ansprüche 1 bis 3, **dadurch gekennzeichnet, dass** der Entladekondensator (C4) eine Kapazität von 100 pF bis 330 nF aufweist.

5. Sperrwandler (1) nach Anspruch 4, **dadurch gekennzeichnet, dass**, der Entladekondensator (C4) eine Kapazität von 470 pF bis 100 nFaufweist.

6. Sperrwandler (1) nach Anspruch 5, **dadurch gekennzeichnet, dass**, der Entladekondensator (C4) eine Kapazität von 1 nF bis 10 nF aufweist.

7. Sperrwandler (1) nach einem der Ansprüche 1 bis 6, **dadurch gekennzeichnet, dass** eine Entladeschaltung für den Entladekondensator (C4) vorgesehen ist.

8. Sperrwandler (1) nach Anspruch 7, **dadurch gekennzeichnet, dass** ein parallel zum Entladekondensator (C5) geschalteter Entladewiderstand (R4) als Entladeschaltung vorgesehen ist.

9. Sperrwandler (1) nach Anspruch 8, **dadurch gekennzeichnet, dass** der Entladewiderstand (R4) einen elektrischen Widerstand im Bereich von 1,8 kΩ bis 18, vorzugsweise im Bereich von 10 kΩ bis 5,6 MΩ, besonders vorzugsweise 33 kΩ bis 1 MΩ, aufweist.

10. Sperrwandler (1) nach Anspruch 8, **dadurch gekennzeichnet, dass** die Entladeschaltung eine in Serie zum Entladewiderstand (R4) geschaltete Zenerdiode umfasst, **und dass** der Entladewiderstand (R4) einen elektrischen Widerstand von 100 Ω bis 1 MΩ MΩ, vorzugsweise 1 kΩ bis 100 kΩ,, besonders vorzugsweise 2,2 kΩ bis 47 kΩ aufweist

11. Verfahren zum Wandeln einer Eingangsgleichspannung (Ue) eines Sperrwandlers (1) in eine Ausgangsgleichspannung (Ua) des Sperrwandlers (1), wobei (T) abwechselnd von einer Leitphase (LS) in eine Sperrphase (PS) geschaltet wird, wobei
- in der Leitphase (PL) ein Halbleiterschalter (Q1) eine Primärinduktivität (L1) eines Speichertransformators (2) mit der Eingangsgleichspannung (Ue) verbindet, und die Eingangsgleichspannung (Ue) auf eine mit der Primärinduktivität (L1) magnetisch gekoppelte Sekundärinduktivität (L2) transformiert wird und wobei eine in Serie mit der Sekundärinduktivität (L2) geschaltete Ausgangsdiode (D2) sperrt, wodurch Energie (E) im Speichertransformator (2) gespeichert wird und
- in der Sperrphase (PS) der Halbleiterschalter (Q1) die Primärinduktivität (L1) von der Eingangsgleichspannung (Ue) trennt, womit die Ausgangsdiode (D2) leitet und der Speichertransformator (T) die gespeicherte Energie (E) in Form eines Ausgangsstroms (i2) über die Sekundärinduktivität (L2) an einen Ausgangskondensator (C2) abgibt, an welchem die Ausgangsgleichspannung (Ua) anliegt, **dadurch gekennzeichnet, dass**
- beim Schalten von der Leitphase (PL) in die Sperrphase (PS) in einer Streuinduktivität (Ls) des Speichertransformators (T) gespeicherte Restenergie (R) als Reststrom (is) durch eine parallel zur Primärinduktivität (L1) geschaltete Serienschaltung aus einer Speicherdiode (D4) mit einer Sperrverzugszeit (trr) von 200 ns bis 5µs, vorzugsweise 300 ns bis 3µs, besonders vorzugsweise 500 ns bis 2 µs, und einem Entladekondensator (C4) fließt, wodurch sich eine Entladekondensatorspannung (U4) des Entladekondensator (C4) um eine Spannungsüberhöhung (Us) erhöht und der Entladekondensator (C4) die Spannungsüberhöhung (Us) während der Sperrverzugszeit (trr) zumindest teilweise als Rückstrom (ir) in Sperrrichtung der Speicherdiode (D4) in die Primärinduktivität (L1) entlädt, wobei die Primärwindung (L1) den Rückstrom (ir) auf die Sekundärwindung (L2) transformiert, wo sich der transformierte Rückstrom (ir') zum Sekundärstrom (i2) addiert.

12. Verfahren nach Anspruch 11, **dadurch gekennzeichnet, dass** bei einem Sekundärstrom (i2) von Null von der Sperrphase (PS) in die Leitphase (PL) geschaltet wird.

13. Verfahren nach Anspruch 12, **dadurch gekennzeichnet, dass** von der Sperrphase (PS) in die Leitphase (PL) geschaltet wird, wenn der der Sekundärstrom (i2) Null erreicht hat und zusätzlich eine Verzögerungszeit (tv) abgelaufen ist.

14. Verfahren nach einem der Ansprüche 12 bis 13, **dadurch gekennzeichnet, dass** bei einem Minimum einer am Halbleiterschalter (Q1) auftretenden Schalterspannung (U) von der Sperrphase (PS) in die Leitphase (PL) geschaltet wird.

15. Verfahren nach einem der Ansprüche 12 bis 14, **dadurch gekennzeichnet, dass** innerhalb einer Taktperiode (T) abwechselnd von einer Leitphase (LS) in eine Sperrphase (PS) geschaltet wird und der Sperrwandler (2) vorzugsweise mit einer Taktperiode (T) von 2 µs bis 50µs betrieben wird.
